# DEMANDE DE BREVET EUROPEEN

(11) **EP 0 620 137 A1**
(43) Date de publication de la demande: **19.10.1994**
(21) Numéro de dépôt: 94400829.1
(22) Date de dépôt: 15.04.1994
(51) Int. Cl.: B60Q 1/04

(54) **Projecteur pour véhicule automobile**

(30) Priorité: 15.04.1993 FR 9304450
(71) Demandeur: VALEO VISION, 93000 Bobigny (FR)
(72) Inventeur: Berton, Jacques, F-77186 Noisiel (FR)
(74) Mandataire: Martin, Jean-Jacques

(57) **Abrégé**

L'invention concerne un projecteur pour véhicule automobile, à moyens de montage perfectionnés.

Ce projecteur, qui comporte des moyens optiques pour former un faisceau lumineux, une glace de fermeture comportant une partie tournée vers l'avant du véhicule et au moins un organe de montage (41) du projecteur sur une partie de carrosserie (3) fixée rigidement ou formant partie intégrante de cette dernière, est remarquable par le fait qu'il comprend en outre, entre ladite partie de la glace tournée vers l'avant du véhicule et ledit organe de montage (41), au moins un élément de résistance mécanique minimale (42) apte à être sollicité lors d'un choc frontal (F) sur ladite partie, pour appliquer au point de montage dudit organe sur la carrosserie (3) un effort réduit.

## Description

La présente invention concerne un projecteur pour véhicule automobile, à moyens de montage perfectionnés. Elle concerne plus particulièrement un projecteur qui comporte des moyens aptes à limiter, voire supprimer, le nombre de pièces cassées ou déformées lorsque le véhicule subit un choc frontal au niveau de la partie tournée vers l'avant du véhicule de ce dernier.

Ce projecteur est du type comportant des moyens optiques pour former un faisceau lumineux, une glace de fermeture avec une partie tournée vers l'avant du véhicule et au moins un organe de montage du projecteur sur une partie de carrosserie fixée rigidement ou formant partie intégrante de cette dernière.

Lorsqu'un véhicule automobile subit un choc frontal au niveau de l'un de ses projecteurs, et dans l'hypothèse où la glace de fermeture de ce projecteur est en verre, généralement celle-ci se brise, les autres éléments du projecteur ou de la carrosserie environnante n'étant pas atteints.

Lorsque la glace est en matière plastique, il arrive que cette dernière ne se brise pas mais se déforme. Toutefois, la souplesse de la glace n'est pas suffisante pour encaisser à elle seule tous les efforts.

Au contraire, c'est l'ensemble du boîtier formant le projecteur qui s'enfonce suite au choc, ce qui provoque également des dégâts au niveau de la carrosserie de la voiture dans la zone de montage du projecteur. Il est alors nécessaire de réparer ou de changer le projecteur mais également de procéder à des travaux de remise en état de la carrosserie.

La présente invention a pour but de remédier à ces problèmes en proposant un projecteur dont la structure soit telle que, en cas de choc frontal sur ce dernier, le point de montage du projecteur sur la carrosserie subisse un effort réduit, en tout cas non suffisant pour déformer ladite carrosserie.

Un autre objectif de l'invention est de fournir des moyens permettant d'atteindre le but indiqué ci-dessus, tout en étant économiques et faciles à mettre en place et à démonter.

Ces différents objectifs sont atteints, conformément à l'invention, par le fait que le projecteur, du type indiqué plus haut, comprend en outre, entre ladite partie de la glace tournée vers l'avant du véhicule et ledit organe de montage, au moins un élément de résistance mécanique minimale apte à être sollicité lors d'un choc frontal sur ladite partie, pour appliquer au point de montage dudit organe sur la carrosserie, un effort réduit.

Grâce à cette structure, en cas de choc frontal, seul l'élément de résistance mécanique encaisse les efforts dûs à ce choc, de sorte que le point de montage de l'élément sur la carrosserie subit un effort très réduit ou nul, c'est-à-dire insuffisant pour déformer cette carrosserie.

De préférence, ladite glace est en matière plastique.

Dans une forme de réalisation, ledit élément de résistance mécanique minimale consiste en un élément frangible. Selon d'autres caractéristiques avantageuses mais non limitatives de ce mode de réalisation :
- ledit élément fait partie intégrante de ladite glace ;
- ladite glace est du type comportant une partie tournée vers l'avant du véhicule et des flancs latéraux dirigés essentiellement vers l'arrière de celui-ci, ledit élément consistant en la zone de liaison entre ladite partie tournée vers l'avant et les flancs latéraux, cette zone présentant une faible épaisseur ;
- ladite glace est du type comportant une partie tournée vers l'avant du véhicule et des flancs latéraux, dirigés essentiellement vers l'arrière de celui-ci, lesdits flancs ayant une épaisseur inférieure à celle de ladite partie tournée vers l'avant, de sorte qu'en cas de choc frontal, ladite glace cède au niveau desdits flancs, par évasement de ces derniers.

Selon une autre forme de réalisation, ledit élément constitue une pièce intermédiaire interchangeable pouvant être fixée audit organe de montage, cette pièce comportant deux plaquettes parallèles disposées sensiblement perpendiculairement à ladite partie de glace tournée vers l'avant et dans le prolongement l'une de l'autre, ces plaquettes étant reliées bord à bord par une zone de moindre résistance, apte à être cassée.

Selon encore un autre mode de réalisation, ledit élément consiste en un élément coulissant apte à être déplacé lors d'un choc frontal et dans la même direction que ce choc, pour appliquer au point de montage dudit élément sur la carrosserie un effort réduit.

Selon certaines caractéristiques avantageuses mais non limitatives de ce mode de réalisation :
- ledit élément comporte une lumière oblongue d'axe sensiblement perpendiculaire à ladite partie tournée vers l'avant du véhicule et la partie de carrosserie comprend des moyens de fixation audit élément montés au niveau de cette lumière et aptes à permettre un mouvement de translation dudit élément par rapport à la partie de carrosserie.
- ledit élément fait partie intégrante de l'organe de montage.
- ladite lumière comprend une zone formant point dur.

Enfin, selon un dernier mode de réalisation, ledit élément coulissant est apte à reprendre sa position primitive après le choc frontal.

De préférence le ou chaque organe de montage comprend un ressort de compression.

Avantageusement, ledit ressort est monté entre une paroi de fond dudit organe de montage et une paroi de fond dudit élément coulissant, l'organe de montage comportant au moins une lumière de guidage pour des ergots solidaires de l'élément coulissant.

De manière particulièrement avantageuse, ledit élément coulissant est prévu interchangeable.

D'autres caractéristiques et avantages de la présente invention apparaîtront à la lecture de la description de certains modes de réalisation préférentiels, description faite en référence aux dessins annexés dans lesquels :
- la figure 1 est une vue en coupe horizontale d'une glace de fermeture d'un projecteur conforme à un premier mode de réalisation ;
- la figure 2 est également une vue en coupe horizontale d'une glace de fermeture d'un projecteur conforme à un second mode de réalisation de l'invention ;
- les figures 3 et 4 sont respectivement des vues en coupe verticale des moyens essentiels formant partie d'un troisième mode de réalisation, respectivement avant et après un choc frontal ;
- la figure 5 est une vue de dessus des moyens illustrés à la figure 3 ;

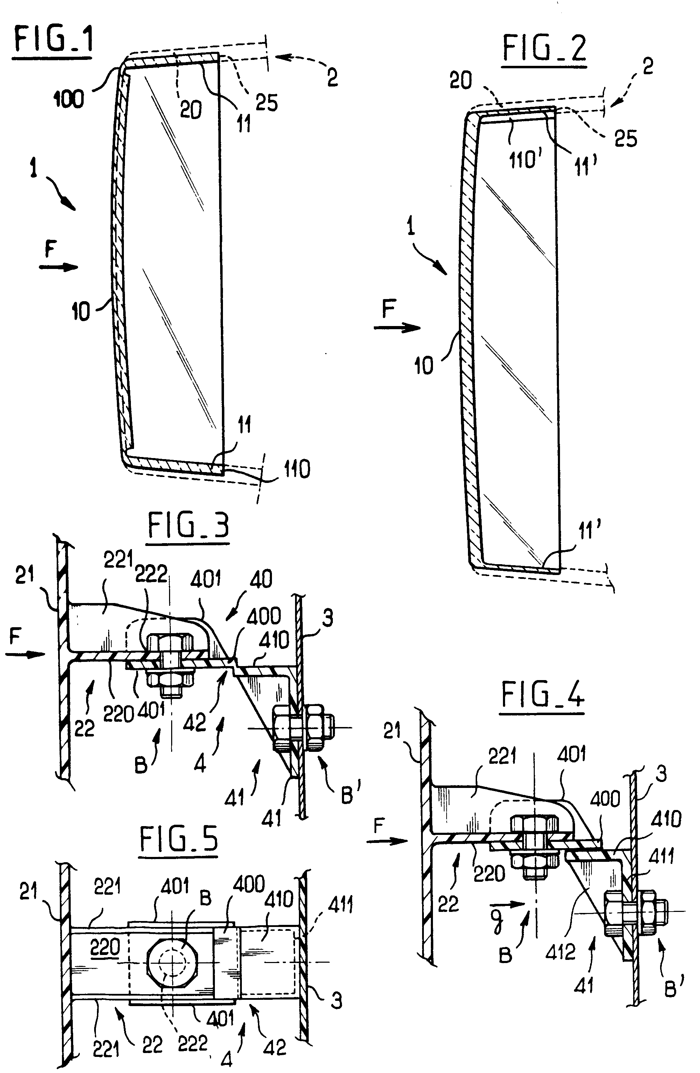

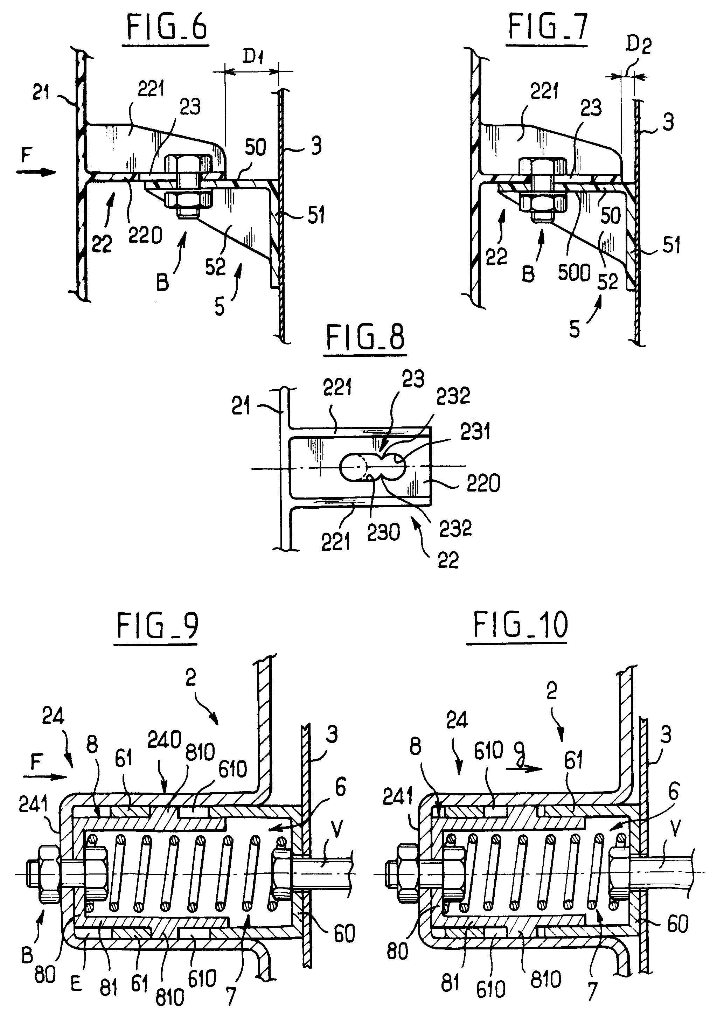

- les figures 5 et 6 sont des vues en coupe verticale des moyens formant partie intégrante d'une quatrième forme de réalisation du projecteur de l'invention, respectivement avant et après un choc frontal ;
- la figure 8 est une vue de dessus d'une pièce visible également aux figures 6 et 7 ;
- les figures 9 et 10 sont des vues en coupe verticale des moyens formant partie intégrante d'un cinquième mode de réalisation du projecteur conforme à l'invention, dans les positions qu'ils occupent respectivement avant et pendant un choc frontal.

Afin de ne pas alourdir inutilement les dessins annexés, le projecteur conforme à l'invention n'a pas été représenté complètement. On y a fait simplement figurer les éléments essentiels du projecteur, qui permettent de remplir le but recherché.

Sauf mention contraire dans le texte qui suit, la glace du projecteur est toujours située vers la gauche des figures, le choc frontal que ce projecteur est amené à subir étant à chaque fois symbolisé par la flèche F.

Dans ces dessins, des éléments similaires qui apparaissent sur plusieurs figures portent les mêmes références numériques.

Dans la forme de réalisation de la figure 1, le projecteur comporte un boîtier dont les flancs portent la référence numérique 2. Ce boîtier est destiné à recevoir, par exemple par clipsage ou par collage, une glace de fermeture en matière plastique transparente 1. Cette glace, par exemple fabriquée par moulage, comporte une partie 10 tournée vers l'avant du véhicule et des flancs latéraux 11 dirigés essentiellement vers l'arrière du véhicule. La glace a ainsi la forme générale d'une demi-boîte ouverte.

Conformément à l'invention, la zone de liaison 100 entre la partie 10 tournée vers l'avant et les flancs latéraux 11 présente une épaisseur nettement plus réduite que celle de la partie 10 et des flancs 11.

Comme le montre la figure 1, les flancs 11 sont destinés à être engagés à l'intérieur du boîtier 2, de telle sorte que leur chant 110 vienne en butée contre un épaulement 25 formé dans la paroi 20 du boîtier 2.

On comprend aisément qu'en cas de choc frontal F sur la partie 10 de la glace, celle-ci reste intacte dans sa partie centrale, ceci étant dû notamment à la plus forte épaisseur de matière plastique dans cette zone, tandis qu'elle se casse au niveau de la zone périphérique 100.

De cette façon, seule la glace est brisée, le reste du projecteur étant resté immobile ou pratiquement immobile. En d'autres termes les dégâts sont réduits au minimum.

Dans la variante de réalisation de la figure 2, la glace 1, du même type général que celle de la figure 1, comporte des flancs 11 d'une épaisseur nettement inférieure à celle de la partie avant 10.

De la même façon, lorsque le projecteur subit un choc frontal F au niveau de la partie 10, les flancs 11' n'ont pas une épaisseur suffisante pour résister à l'impact et s'affaisse, en se brisant.

Là encore, les dégâts sont réduits au minimum. On notera que sur un des côtés de la glace, celle-ci comporte une nervure 110' simplement destinée à faciliter le moulage de la glace par injection.

Dans le mode de réalisation de la figure 3, le boîtier 2 formant partie du projecteur comporte une portion de paroi verticale 21. Celle-ci a été représentée strictement verticale afin de simplifier la figure ; toutefois elle pourrait être galbée. Cette portion de paroi se situe par exemple à la partie arrière du projecteur ou sur l'un de ses côtés.

La portion de paroi 21 porte une pièce 22 formant saillie et orienté vers l'arrière du projecteur. Elle s'étend perpendiculairement à la paroi 21. Cette pièce comporte une base horizontale 220 et deux ailes verticales 221. Le rebord supérieur de ces ailes est, de la paroi 21 vers l'extrémité de la pièce 22, horizontale puis inclinée, de manière à rejoindre I'extrémité libre de la base 220 par une région galbée. La base 220 comporte une ouverture 222 pour la mise en place d'une vis formant partie d'un boulon B.

Dans cette forme de réalisation, I'élément de résistance mécanique minimale est constitué par la pièce 4. Cette dernière comporte deux parties principales 40 et 41. La partie 41 est destinée à être mise en place, par exemple à l'aide d'un boulon B, sur une partie fixe de carrosserie 3, au niveau de sa face verticale 411. Cette face 411 se raccorde à une plaquette 410 disposée à angle droit et dirigée vers ce projecteur. La rigidité de cette pièce est assurée au moyen de deux nervures verticales et triangulaires 412.

L'extrémité libre de la plaquette 410 se rattache au second élément 40 par sa partie horizontale - ou plaquette - 400, au niveau d'une zone de faible épaisseur et de faible résistance mécanique 42. Les deux plaquettes 400 et 410 sont donc dans l'alignement l'une de l'autre mais décalées en hauteur.

Comme cela est visible sur les figures 4 à 5, la partie 40 comporte également deux ailes 401 verticales dont l'écartement mutuel est légèrement supérieur à celui des ailes 221.

La partie 40 comporte, au niveau de sa plaquette 400, une ouverture 401 destinée à coïncider avec celle 222 de l'élément 22. Ces ouvertures sont prévues pour recevoir, comme cela est visible sur les figures 3 et 4, la vis et l'écrou d'un boulon B.

En l'absence de choc frontal F, les pièces décrites ci-dessus occupent la disposition représentée à la figure 3. De cette façon, le projecteur est solidement rattaché à la carrosserie 3 au moyen de la pièce intermédiaire 4.

En cas de choc frontal F, ces éléments possèdent une résistance mécanique suffisante pour ne pas être endommagés, sauf la pièce 4, qui se brise au niveau de sa zone de faible épaisseur 42 (voir figure 4).

En quelque sorte, cette pièce joue le rôle d'un fusible mécanique. A la figure 4, on remarque que le projecteur (et bien entendu la partie 400) coulisse dans le sens de la flèche g en direction de la carrosserie 3, sans toutefois l'atteindre. En effet, le boulon B vient en butée contre le rebord libre de la partie 410.

Dans le mode de réalisation décrit aux figures 6 à 8 la partie de paroi 21 porte une pièce 22 du même type général que celle décrite en référence aux figures 3 à 5. Toutefois, comme le montre plus précisément la figure 8, cette pièce porte au niveau de sa base horizontale 220 une lumière longitudinale référencée 23. Cette lumière est formée de l'avant vers l'arrière, c'est-à-dire de la gauche vers la droite de la figure d'une ouverture de forme générale ovale 230 qui communique avec un seconde ouverture 231 à contour circulaire. Ces deux trous sont séparés par deux petites saillies 232 qui se font face, et qui font office, comme on l'expliquera plus loin, de point dur.

Comme le montrent les figures 6 et 7, une pièce 5 est rapportée à un élément de carrosserie 3 par sa face verticale 51. Cette pièce comporte également une face 50 qui s'étend horizontalement et qui comporte une ouverture circulaire 500 de même diamètre que l'ouverture 231 évoquée plus haut. La pièce 5 est rigidifiée par deux nervures verticales triangulaires 52. Les pièces 22 et 5 sont destinées à se positionner comme le montre la figure 6, c'est-à-dire disposées respectivement l'une en-dessous de l'autre, les ouvertures 232 et 500 se faisant face. Elles sont fixées solidement l'une à l'autre au moyen d'un boulon B dont la vis traverse les deux ouvertures. En l'absence de choc frontal F, les deux pièces sont dans l'état représenté à la figure 6, le rebord libre de la pièce 22 étant séparé de l'élément de carrosserie 3 d'une distance D1 (voir figure 6).

En cas de choc frontal F, celui-ci exerce une poussée du projecteur et de la pièce 22 en direction de l'élément de carrosserie 3. Ceci se traduit par le fait que la pièce 22 a tendance à se déplacer vers la droite de la figure en franchissant le point dur formé par les deux saillies 232 de la lumière 23. Ce coulissement est rendu possible jusqu'à ce que la vis du boulon B vienne en butée contre le rebord avant du trou 230. Cette position est illustrée à la figure 7 ainsi qu'à la figure 8 par un contour en traits pointillés. La longueur de la lumière 23 est prévue de sorte que le rebord libre de la pièce 22 soit éloigné de la pièce de carrosserie 3 d'une distance réduite D2.

Dans la variante de réalisation des figures 9 et 10 une pièce 6 est rapportée sur l'élément de carrosserie 3. Cette pièce a la forme d'un tube à fond plein 60, pourvu d'une ouverture centrale pour le passage d'une vis V et sa solidarisation à la pièce de carrosserie 3. Son extrémité ouverte est tournée du côté du projecteur 2. Sa paroi 60 comporte deux lumières longitudinales 610 diamétralement opposées.

Le projecteur comporte une saillie en forme de manchon 24 dirigée vers la glace du projecteur (c'est-à-dire vers la gauche des figures). Ce manchon est de forme tubulaire, avec un fond 241 pourvu d'une ouverture centrale en regard de celle de la pièce 6.

Dans ce mode de réalisation, le projecteur comporte également une pièce coulissante 8 de forme tubulaire dont le fond 80 comporte une ouverture centrale pour le passage de la vis d'un boulon B et sa solidarisation au fond 241 de la saillie 24. Cette pièce intermédiaire a un diamètre extérieur qui lui permet d'être emmanchée dans la pièce 6, leurs fonds respectifs se faisant face.

Comme le montrent les figures 5 et 10, l'élément coulissant 8 comporte au niveau de sa paroi latérale 81 deux ergots 810 destinés à venir en place à l'intérieur des lumières 610 de la pièce 6. Par ailleurs, on notera que les dimensions de ces pièces sont telles qu'il existe un espace E entre le fond 80 de la pièce 8 et le rebord libre ouvert de la pièce 6. Entre les fonds respectifs des pièces 6 et 8 est monté un ressort de compression hélicoïdal 7.

On comprend donc qu'en cas de choc frontal F sur la partie tournée vers l'avant de la glace du projecteur, l'ensemble formé par le projecteur 2 et la pièce 8 coulisse dans le sens de la flèche g, les ergots 810 de la pièce coulissante 8 se déplaçant à l'intérieur des lumières 610.

Lorsque le projecteur n'est plus soumis au choc frontal F le ressort 7 peut donc reprendre sa position de repos qu'il occupe à la figure 9, le projecteur revenant alors dans sa position initiale.

## Revendications

1. Projecteur pour véhicule automobile, comportant des moyens optiques pour former un faisceau lumineux, une glace de fermeture (1) comportant une partie (10) tournée vers l'avant du véhicule et au moins un organe de montage (22, 24) du projecteur sur une partie de carrosserie (3) fixée rigidement ou formant partie intégrante de cette dernière, caractérisé en ce qu'il comprend en outre, entre ladite partie (10) de la glace tournée vers l'avant du véhicule et ledit organe de montage (22, 24), au moins un élément de résistance mécanique minimale (100 ; 110'; 4 ; 23 ; 8) apte à être sollicité lors d'un choc frontal (F) sur ladite partie, pour appliquer au point de montage dudit organe sur la carrosserie (3) un effort réduit.

2. Projecteur selon la revendication 1, caractérisé en ce que ladite glace (1) est en matière plastique.

3. Projecteur selon la revendication 1 ou 2, caractérisé en ce que la revendication 1, caractérisé en ce que ledit élément consiste en un élément frangible (100 ; 110', 4).

4. Projecteur selon l'une des revendications 1 à 3, caractérisé en ce que ledit élément (100, 110') fait partie intégrante de ladite glace (1).

5. Projecteur selon la revendication 4, caractérisé en ce que ladite glace (1) est du type comportant une partie (10) tournée vers l'avant du véhicule et des flancs latéraux (11) dirigés essentiellement vers l'arrière de celui-ci, ledit élément consistant en la zone de liaison (100) entre ladite partie (10) tournée vers l'avant et les flancs latéraux (11), cette zone présentant une épaisseur réduite, de faible résistance mécanique.

6. Projecteur selon la revendication 4, caractérisé en ce que ladite glace (1) est du type comportant une partie (10) tournée vers l'avant du véhicule et des flancs latéraux (11'), dirigés essentiellement vers l'arrière de celui-ci, lesdits flancs (11') ayant une épaisseur inférieure à celle de ladite partie (10) tournée vers l'avant, de sorte qu'en cas de choc frontal (F), ladite glace cède au niveau desdits flancs (11'), par écrasement de ces derniers.

7. Projecteur selon la revendication 3, caractérisé en ce que ledit élément (4) constitue une pièce intermédiaire interchangeable pouvant être fixée audit organe de montage, cette pièce comportant deux plaquettes parallèles (40, 41) disposées sensiblement perpendiculairement à ladite partie de glace tournée vers l'avant et dans le prolongement l'une de l'autre, ces plaquettes (40, 41) étant reliées bord à bord par une zone de moindre résistance (42), apte à être cassée.

8. Projecteur selon la revendication 1 ou 2, caractérisé en ce que ledit élément consiste en un élément coulissant (22, 8) solidaire du projecteur et apte à être déplacé lors d'un choc frontal (F), dans la même direction que ce choc, pour appliquer au point de montage dudit élément sur la carrosserie un effort réduit.

9. Projecteur selon la revendication 8, caractérisé en ce que ledit élément (22) coulissant est constitué par l'organe de montage lui-même et comporte une lumière oblongue (23) d'axe sensiblement perpendiculaire à ladite partie tournée vers l'avant du véhicule, la partie de carrosserie (3) comprenant des moyens de fixation (5, B) audit élément, montés au niveau de cette lumière (23) et aptes à permettre un mouvement de translation dudit élément (22) par rapport à la partie de carrosserie (3).

10. Projecteur selon la revendication 9, caractérisé en ce que ladite lumière (23) comprend une zone formant point dur (232).

11. Projecteur selon la revendication 8, caractérisé en ce que ledit élément coulissant (8) est apte à reprendre sa position primitive après ledit choc frontal.

12. Projecteur selon la revendication 11, caractérisé en ce que le ou chaque organe de montage comprend un ressort de compression (7).

13. Projecteur selon la revendication 12, caractérisé en ce que ledit ressort (7) est monté entre la paroi de fond (60) dudit organe de fixation (6) à la partie de carrosserie (3) et une paroi de fond (80) dudit élément coulissant (8), l'organe de fixation (6) comportant au moins une lumière de guidage (610) pour des ergots (810) solidaires de l'élément coulissant (8).

14. Projecteur selon la revendication 13, caractérisé en ce que ledit élément coulissant (8) est prévu interchangeable.
